# EUROPEAN PATENT SPECIFICATION

(11) **EP 3 670 138 B1**
(45) Date of publication and mention of the grant of the patent: **18.09.2024**
(21) Application number: 19217677.4
(22) Date of filing: 18.12.2019
(51) Int. Cl.: B29C 45/33, B29C 67/24, B29C 45/14, B29L 31/30

(54) **A MACHINE FOR INSERT-MOLDING A GASKET ON A TANK OF PLASTIC MATERIAL**
MASCHINE ZUM UMSPRITZEN EINER DICHTUNG AN EINEM TANK AUS KUNSTSTOFFMATERIAL
MACHINE DE MOULAGE D'INSERT D'UN JOINT SUR UN RÉSERVOIR EN PLASTIQUE

(30) Priority: 21.12.2018 IT 201800020761
(43) Date of publication of application: 24.06.2020
(73) Proprietor: DENSO THERMAL SYSTEMS S.p.A., 10046 Poirino (Torino) (IT)
(72) Inventor: SHAHBAZIANS, Vahan, I-10046 POIRINO (Torino) (IT); MEINARDO, Luca, I-10046 POIRINO (Torino) (IT); LONGHINI, Alessandro, I-10046 POIRINO (Torino) (IT); LEAL, Paulo, I-10046 POIRINO (Torino) (IT); CELORIA, Riccardo, I-10046 POIRINO (Torino) (IT); COMMENDATORE, Fausta, I-10046 POIRINO (Torino) (IT)
(74) Representative: Vanzini, Christian

(56) References cited:
- EP-A1- 2 886 991
- US-A- 5 160 474
- US-A- 5 873 485
- US-A1- 2012 175 096
- US-A1- 2018 221 900

## Description

The present invention relates in general to the techniques for the insert-molding of a gasket on tanks of plastic material, such as header tanks for heat exchangers, in particular for car engine cooling radiators.

In this context, the application of Liquid Injection Molding (LIM) technology is known. This molding technology similar to injection molding consists in injecting liquid silicone into a heated cavity and keeping it for a certain time so that the heat-activated cross-linking reaction takes place, providing the final characteristics of elastomer. Silicone is made up of two components, one of which contains the catalyst to activate the reaction. Through a pumping system the two components are conveyed into a static mixer where they are mixed intimately. After mixing, the silicone is injected into the cavity where the cross-linking reaction takes place. The selected silicone has a chemical and/or mechanical adhesion with the plastic support on which it is injected.

In particular, an application of the LIM technology using an injection press and a mold is known, having a half-mold fixed to the fixed plane of the press and a half-mold fixed to the movable part of the press. The mold is formed by a complex set of components, some of which are movable to close the mold on the tank to be subjected to the injection process. It is known that header tanks are present on the market in different sizes and shapes; the known system based on press and mold is however not very flexible because, given the high cost of the molds, it is not economically convenient to keep a set of molds dedicated to different types of tank.

Furthermore, the injection molding machine is a bulky machine and, due to its geometry based on a fixed surface and movable surface, it does not allow easy access to the work area.

US 5873485 A discloses a machine having the features of the preamble of claim 1. US 2018/221900 A1 discloses a machine for injection molding a single-material piece. US 5160474 A discloses a machine for multi-material injection molding of a tank with gasket.

An object of the present invention is to provide a machine which allows overcoming at least in part the drawbacks relating to the prior art discussed above.

This object is achieved according to the invention by a machine for insert-molding a gasket on a plastic material tank which has a peripheral edge provided with a flange, according to claim 1. This machine comprises
a molding part movable along a first axis, said molding part having frontally a coupling surface adapted to receive the peripheral edge of the tank, and on which there is formed a cavity configured to be supplied with a second plastic material in fluid state and form with said second plastic material a gasket on the peripheral edge of the tank, and
at least one pair of opposed carriages slidable along a second axis orthogonal to the first axis, said carriages being movable between an open position, in which the carriages allow the tank to be positioned on or removed from the molding part, and a holding position, in which the carriages cooperate to define an aperture having a cross section smaller than the cross section of the flange of the tank,
wherein the molding part is controllable to take the flange of the tank against an edge of the carriages in holding position and apply against the carriages a closure force directed along said first axis so that the flange of the tank is clamped between the edge of the carriages and the coupling surface of the molding part.

The invention also relates to a method for insert-molding a gasket on a tank of plastic material that has a peripheral edge provided with a flange, with a machine according to the invention, the method comprising the following steps
positioning the tank on the coupling surface of the molding part,
closing the carriages around the tank into the holding position,
moving the molding part to take the flange of the tank against the edge of the carriages in holding position and apply against the carriages a closure force directed along said first axis so that the flange of the tank is clamped between the edge of the carriages and the coupling surface of the molding part,
injecting the second plastic material in fluid state into the cavity of the molding part, and allowing the second plastic material to cure,
bringing the carriages back into the open position, and
removing the tank with the molded gasket.

The machine according to the invention can be implemented as a horizontal bench where the function of holding the plastic tank is given by four carriages moved on axis X and Y, and the closing function, conventionally carried out by the press, can be given by a vertical punch (axis Z) which moves the forming part in which the molding cavity of the silicone gasket is made. In practice, all movements and functions of the machine are grouped on one side (for example on the lower side) with respect to the work area, giving ample access to the latter. Alternatively, the machine can be implemented with carriages moved on a horizontal axis and on a vertical axis, and a punch movable on a horizontal axis, retaining the features of compactness and accessibility with respect to the horizontal bench.

Moreover, the mold is replaced by a molding part or block which can be made as an element without movable parts and in any case significantly less complex than conventional molds. This allows keeping available a set of elements suitable for the insert-molding of tanks of different sizes and shapes, without entailing exorbitant production costs.

Preferred embodiments of the invention are defined in the dependent claims, which are to be intended as an integral part of the present description.

Further features and advantages of the device according to the invention will become apparent from the following detailed description of an embodiment of the invention, made with reference to the accompanying drawings, provided for illustrative and non-limiting purposes only, in which:
- figure 1 is a diagram representing a LIM molding machine;
- figure 2 is a sectional view representing the operating principle of the present invention;
- figures 3a and 3b represent two different embodiments of a molding part usable in the present invention;
- figures 4 and 5 are elevation views showing a closure group of a machine according to the invention;
- figure 6 is a sectional view on an enlarged scale of a part of the closure group of figures 4 and 5;
- figure 7 is a perspective view of the carriages of the closure group; and
- figures 8a to 8c represent different movement steps of the machine according to the invention.

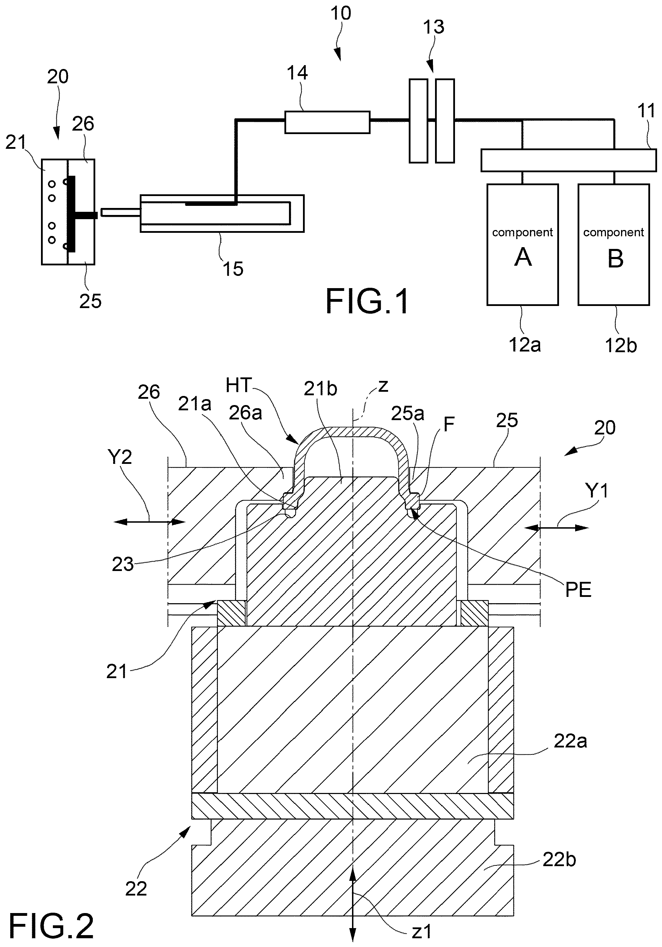

With reference to figure 1, a machine LIM is schematically shown. Said machine conventionally comprises a feeding and injection system 10 and a closure group 20.

The feeding and injection system has the task of mixing the components of the plastic material, in particular silicone, and of feeding the plastic material in a fluid state to the closure group 20. For this purpose, the injection group is conventionally provided with a feeding pump 11 which takes the plastic material components from respective tanks 12a and 12b and feeds them to a dispensing group 13 and to a mixer 14. The produced mixture is injected into the closure group 20 by means of a generally cooled cylinder injection unit 15.

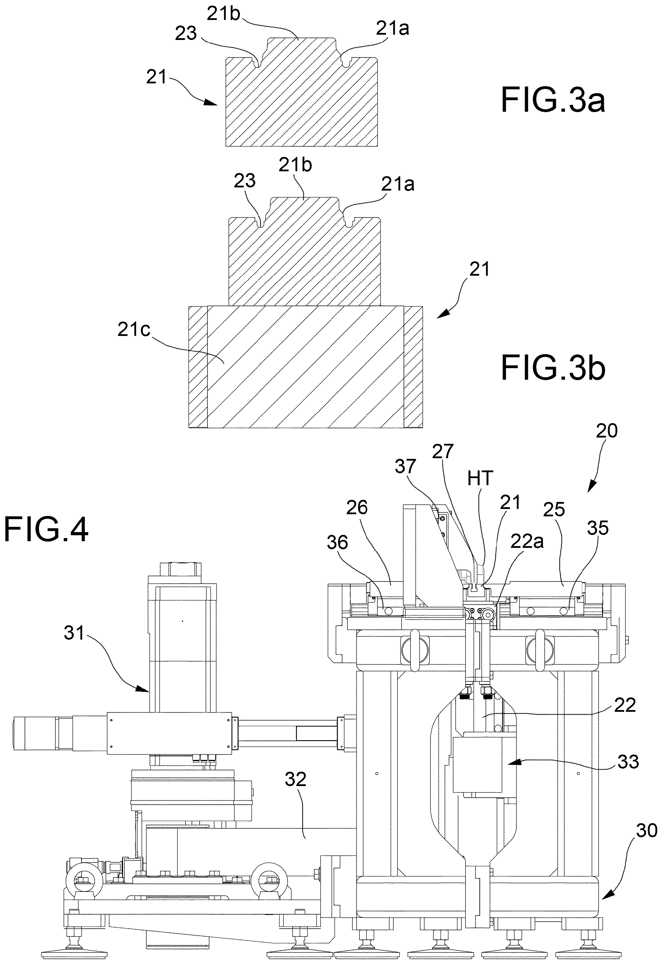

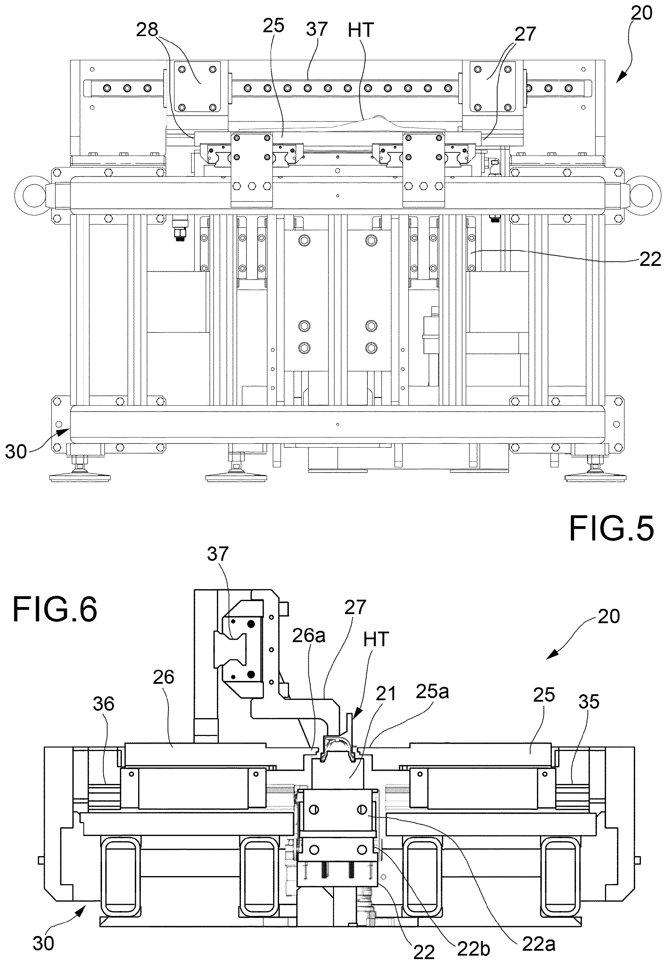

The closure group 20 is represented at a conceptual level in figure 2, while in figures 4 to 7 an example of embodiment of the closure group 20 is shown by way of non-limiting example.

Figure 2 shows a tank HT made of plastic material, in particular a header tank for a heat exchanger, more precisely for a car engine cooling radiator. The tank HT has a peripheral edge PE provided with a flange F projecting transversely towards the outside. Conventionally, this peripheral edge comprises two opposite long sides, visible in section in figure 2, and two short opposite sides, not visible in the figures, which interconnect the long sides.

The closure group 20 comprises a block or molding part 21 movable along a first axis, which in the example shown is a vertical axis indicated with z. For this purpose, the molding part 21 is mounted frontally on a punch 22 driven by an actuator or servomotor to implement such a linear motion, as indicated by the arrow Z1. In the illustrated example, a heating element 22a and a possible cooling element 22b are arranged on the punch 22. The molding part 21 has frontally a coupling surface 21a adapted to receive the peripheral edge PE of the tank HT. On the coupling surface 21a a cavity 23 is formed which is configured to be fed with the plastic material supplied by the feeding and injection system 10 and to form with this plastic a gasket on the peripheral edge PE of the tank HT. For this purpose, ducts (not shown) are formed in the body of the molding part 21, and possibly also in the body of the punch 22, which connect the cavity 23 to the feeding and injection system 10 in a per se known manner.

The molding part 21 also has a centering protrusion 21b protruding from the coupling surface 21a and provided for being inserted into the cavity of the tank HT.

The molding part 21 is removably mounted on the punch 22, so as to allow its replacement with other molding parts having cavities 23 with different geometries.

With reference to figure 3a, the molding part 21 can be a piece in which only the functions of conveying the plastic material and defining the shape of the gasket are implemented, or, with reference to figure 3b, it can also be provided with the heating function, by arranging a heating element 21c on board the molding part 21.

Returning to figure 2, the closure group 20 further comprises (at least) a pair of opposite carriages 25, 26 which slide along a second axis orthogonal to the first axis, which in the example shown is a horizontal axis, for example the axis y. The arrows Y1, Y2 in figure 2 show the movement of the carriage 25 and of the carriage 26, respectively. The carriages 25 and 26 are movable between an open position, in which they allow the insertion or withdrawal of the tank on/from the molding part 21, and a holding position, shown in figure 2, in which the carriages 25, 26 cooperate to define a gap having a smaller cross-section than that of the flange F of the tank HT.

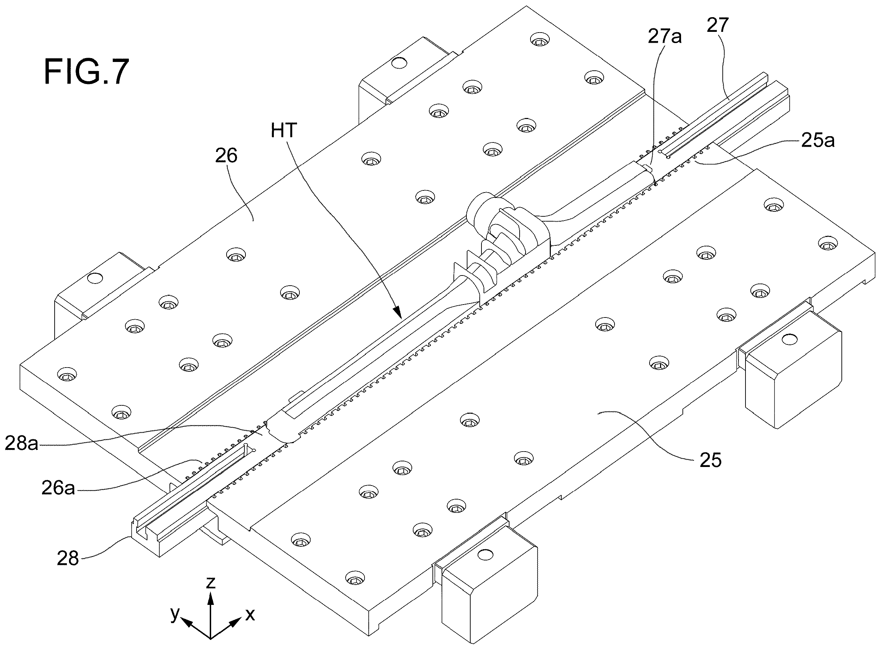

More precisely, and as shown in figure 7, two pairs of opposite carriages 25, 26 can be provided; 27, 28 respectively sliding along the second axis and along a third axis orthogonal to the first axis and to the second axis, which in the example illustrated can be the axis x. A pair of carriages, 25 and 26, is associated with the long sides of the tank HT, and the other pair of carriages, 27 and 28, is associated with the short sides of the tank HT.

According to a plan view, orthogonal to the first axis, z, the molding part 21 is arranged in the center between the carriages 25, 26, 27 and 28.

Through the punch 22, the forming part 21 is controllable to bring the flange F of the tank HT against an edge 25a, 26a of the carriages 25, 26 (or, respectively, against an edge 25a, 26a, 27a and 28a of the carriages 25, 26, 27 and 28) when these carriages are in the holding position. Again by means of the punch 22, the molding part 21 can be controlled to apply against the carriages 25, 26 (or, respectively, against the carriages 25, 26, 27 and 28) a direct closing force along the first axis (vertical axis z in the example).

In this position, the flange F of the tank HT is clamped between the edge of the carriages 25, 26 (or, respectively, against the carriages 25, 26, 27 and 28) and the coupling surface 21a of the molding part 21. The clamping force must be sized so as to withstand the pressure that is created in the cavity 23 when the plastic is injected. The rest of the tank HT protrudes freely through the gap defined by the carriages 25-28 and is not subjected to any load.

With reference to figures 4-7, a possible embodiment of the closure group 20 is now described. According to this example, the group 20 comprises a supporting structure 30 on which the components described above are arranged as well as the components intended for their movement and control. For example, the movement system of the punch 22
comprises a servomotor 31 coupled to a transmission belt 32, through which the servomotor 31 controls a screw-nut mechanism 33 connected to the punch 22. The maintenance of the closing of the punch 21 is guaranteed by the servomotor 31 and possibly, if necessary, by mechanical stops (not shown) operated by pneumatic cylinders (not shown).

The carriages 25, 26 associated with the long sides of the tank HT are coupled with sliding guides 35, 36 carried by the supporting structure 30. For the movement of these carriages 25, 26 respective motors (not shown) are provided which also guarantee locking in the holding position. Furthermore, mechanical stops (not shown) can be provided which, if necessary, ensure further locking of the carriages 25, 26 in the holding position. The carriages 27, 28 associated with the short sides of the tank HT are coupled to a sliding guide 37 carried by the supporting structure 30. For the movement of these carriages 27, 28 respective motors (not shown) are provided which also guarantee locking in the holding position. Furthermore, mechanical stops (not shown) can be provided which, if necessary, ensure further locking of the carriages 27, 28 in the holding position.

The operating steps of the machine described above are as follows.

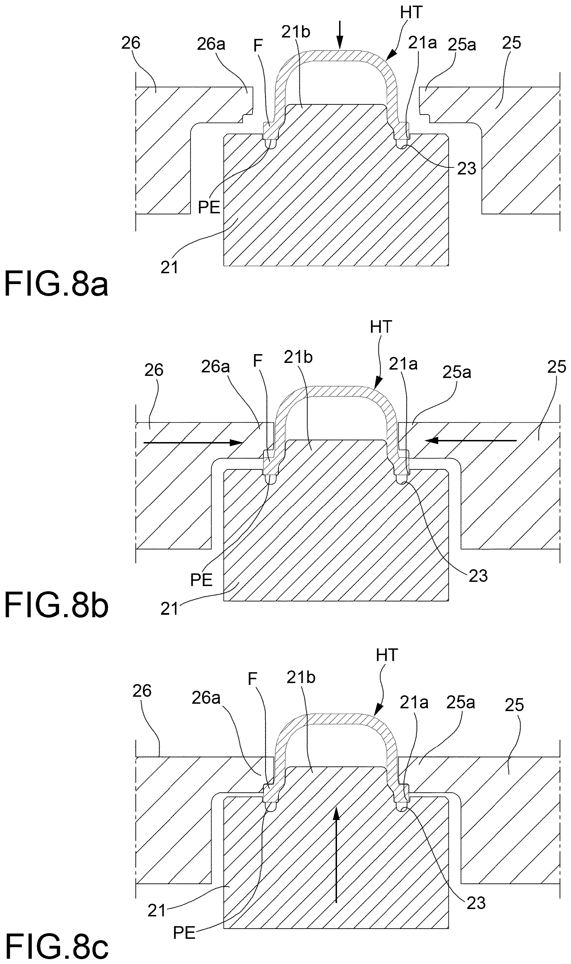

Initially, the plastic tank HT to be insert-molded is positioned, manually or in an automated manner, on the molding part 21 (figure 8a). This step can take place only when the molding part 21 reaches the operating temperature at full speed following the heating received by the heating element (22a or 21c). The molding part 21 is in the starting position, translated downwards with respect to the working position.

Subsequently, the carriages 25-28 in the direction x and y are moved to their holding position and their position is blocked by means of the servomotors or the respective mechanical stops (figure 8b).

Then, the molding part 21 and the tank HT, positioned on it, translate in axis z closing the whole system as a package (figure 8c) and tightening the flange F of the tank HT between the coupling surface 21a of the molding part 21 and the edges 25a-28a of the carriages.

The plastic material is then injected and subsequently cross-linked in the cavity 23 of the molding part 21 by means of the feeding and injection part 10.

Finally, after having moved the carriages 25-28 in opening, the insert-molded tank HT with the integrated gasket is extracted.

## Claims

1. A machine for insert-molding a gasket on a tank (HT) of plastic material, in particular on a header tank for a car engine cooling radiator, said tank having a peripheral edge (PE) provided with a flange (F), wherein the machine comprises
a molding part (21) movable along a first axis (z), said molding part having frontally a coupling surface (21a) adapted to receive the peripheral edge (PE) of the tank (HT), and on which there is formed a cavity (23) configured to be supplied with a second plastic material in fluid state and form with said second plastic material a gasket on the peripheral edge (PE) of the tank (HT), and
at least one pair of opposed carriages (25, 26, 27, 28) slidable along a second axis (y) orthogonal to the first axis (z), said carriages being movable between an open position, in which the carriages allow the tank (HT) to be positioned on or removed from the molding part (21), and a holding position, in which the carriages cooperate to define an aperture having a cross section smaller than the cross section of the flange (F) of the tank (HT),
**characterized in that** the molding part (21) is controllable to take the flange (F) of the tank (HT) against an edge (25a, 26a, 27a, 28a) of the carriages (25, 26, 27, 28) in holding position and apply against the carriages (25, 26, 27, 28) a closure force directed along said first axis so that the flange (F) of the tank (HT) is clamped between the edge (25a, 26a, 27a, 28a) of the carriages (25, 26, 27, 28) and the coupling surface (21a) of the molding part (21).

2. A machine according to claim 1, wherein said at least one pair of carriages comprises two pairs of opposed carriages (25, 26, 27, 28) respectively slidable along the second axis (y) and along a third axis (x) orthogonal to the first axis (z) and to the second axis (y).

3. A machine according to claim 1 or 2, wherein in an injection position the flange (F) of the tank (HT) is clamped between the edge (25a, 26a, 27a, 28a) of the carriages (25, 26, 27, 28) in holding position and the coupling surface (21a) of the molding part (21), and the rest of the tank (HT) protrudes through the aperture defined by the carriages (25, 26, 27, 28).

4. A machine according to any of the preceding claims, wherein the molding part (21) is interchangeable and is removably mounted on a punch (22) movable along the first axis (z).

5. A machine according to claim 4, further comprising a heating element (22a, 21c) configured to heat the second plastic material in fluid state, said heating element being carried by the molding part (21) or by the punch (22).

6. A method for insert-molding a gasket on a tank (HT) of plastic material that has a peripheral edge (PE) provided with a flange (F), with a machine according to any of the preceding claims, the method comprising the following steps
positioning the tank (HT) on the coupling surface (21a) of the molding part (21),
closing the carriages (25, 26, 27, 28) around the tank (HT) into the holding position,
moving the molding part (21) to take the flange (F) of the tank (HT) against the edge (25a, 26a, 27a, 28a) of the carriages (25, 26, 27, 28) in holding position and apply against the carriages (25, 26, 27, 28) a closure force directed along said first axis so that the flange (F) of the tank (HT) is clamped between the edge (25a, 26a, 27a, 28a) of the carriages (25, 26, 27, 28) and the coupling surface (21a) of the molding part (21),
injecting the second plastic material in fluid state into the cavity (23) of the molding part (21), and allowing the second plastic material to cure,
bringing the carriages (25, 26, 27, 28) back into the open position, and
removing the tank (HT) with the molded gasket.

## Patentansprüche

1. Maschine zum Einsatz-Formen einer Dichtung an einen Tank (HT) aus Kunststoffmaterial, insbesondere an einen Sammelbehälter für einen Automotorkühlradiator, wobei der Tank einen mit einem Flansch (F) versehenen Umfangsrand (PE) aufweist, wobei die Maschine aufweist:
ein Formteil (21), das entlang einer ersten Achse (z) bewegbar ist, wobei das Formteil an seiner Stirnseite eine Kupplungsfläche (21a) aufweist, die dazu ausgelegt ist, den Umfangsrand (PE) des Tanks (HT) aufzunehmen, und an der ein Hohlraum (23) ausgebildet ist, der dazu ausgelegt ist, mit einem in flüssigem Zustand befindlichen zweiten Kunststoffmaterial versehen zu werden und mit dem zweiten Kunststoffmaterial eine Dichtung an dem Umfangsrand (PE) des Tanks (HT) auszubilden, und
mindestens ein Paar einander gegenüberliegender Schlitten (25, 26, 27, 28), die entlang einer zweiten Achse (y), die orthogonal zu der ersten Achse (z) ist, verschieblich sind, wobei die Schlitten bewegbar sind zwischen einer offenen Stellung, in der die Schlitten es dem Tank (HT) erlauben, an dem Formteil (21) befestigt oder von diesem gelöst zu werden, und einer Haltestellung, in der die Schlitten zusammenwirken, um eine Öffnung mit einem Querschnitt, der kleiner als der Querschnitt des Flanschs (F) des Tanks (HT) ist, zu definieren,
**dadurch gekennzeichnet, dass** das Formteil (21) steuerbar ist, um den Flansch (F) des Tanks (HT) gegen einen Rand (25a, 26a, 27a, 28a) der in Haltestellung befindlichen Schlitten (25, 26, 27, 28) zu bringen und eine Schließkraft gegen die Schlitten (25, 26, 27, 28) aufzubringen, die entlang der ersten Achse gerichtet ist, so dass der Flansch (F) des Tanks (HT) zwischen dem Rand (25a, 26a, 27a, 28a) der Schlitten (25, 26, 27, 28) und der Kupplungsfläche (21a) des Formteils (21) eingeklemmt ist.

2. Maschine nach Anspruch 1, wobei das mindestens eine Paar von Schlitten zwei Paar einander gegenüberliegender Schlitten (25, 26, 27, 28) aufweist, die jeweils entlang der zweiten Achse (y) und entlang einer dritten Achse (x), die orthogonal zu der ersten Achse (z) und zu der zweiten Achse (y) ist, verschieblich sind.

3. Maschine nach Anspruch 1 oder 2, wobei in einer Einspritzposition der Flansch (F) des Tanks (HT) zwischen dem Rand (25a, 26a, 27a, 28a) der in Haltestellung befindlichen Schlitten (25, 26, 27, 28) und der Kupplungsfläche (21a) des Formteils (21) eingeklemmt ist und der Rest des Tanks (HT) durch die von den Schlitten (25, 26, 27, 28) definierte Öffnung hindurchragt.

4. Maschine nach einem der vorangehenden Ansprüche, wobei das Formteil (21) auswechselbar ist und abnehmbar an einer Stanze (22) befestigt ist, die entlang der ersten Achse (z) bewegbar ist.

5. Maschine nach Anspruch 4, weiter aufweisend ein Heizelement (22a, 21c), das dazu ausgelegt ist, das zweite Kunststoffmaterial in flüssigen Zustand zu erhitzen, wobei das Heizelement von dem Formteil (21) oder der Stanze (22) getragen ist.

6. Verfahren zum Einsatz-Formen einer Dichtung an einen Tank (HT) aus Kunststoffmaterial, der einen mit einem Flansch (F) versehenen Umfangsrand (PE) aufweist, mit einer Maschine nach einem der vorangehenden Ansprüche, wobei das Verfahren die folgenden Schritte aufweist:
Positionieren des Tanks (HT) an der Kupplungsfläche (21a) des Formteils (21),
Einfahren der Schlitten (25, 26, 27, 28) um den Tank (HT) in die Haltestellung,
Bewegen des Formteils (21), um den Flansch (F) des Tanks (HT) gegen den Rand (25a, 26a, 27a, 28a) der in Haltestellung befindlichen Schlitten (25, 26, 27, 28) zu bringen und eine Schließkraft gegen die Schlitten (25, 26, 27, 28) aufzubringen, die entlang der ersten Achse gerichtet ist, so dass der Flansch (F) des Tanks (HT) zwischen dem Rand (25a, 26a, 27a, 28a) der Schlitten (25, 26, 27, 28) und der Kupplungsfläche (21a) des Formteils (21) eingeklemmt ist,
Einspritzen des in flüssigem Zustand befindlichen zweiten Kunststoffmaterials in den Hohlraum (23) des Formteils (21) und Aushärtenlassen des zweiten Kunststoffmaterials,
Zurückbringen der Schlitten (25, 26, 27, 28) in die offene Stellung, und
Entfernen des Tanks (HT) mit der formgegossenen Dichtung.

## Revendications

1. Machine pour le moulage par insertion d'un joint d'étanchéité sur un réservoir (HT) en matière plastique, en particulier sur un réservoir collecteur pour un radiateur de refroidissement de moteur de voiture, ledit réservoir présentant un bord périphérique (PE) pourvu d'une bride (F), dans laquelle la machine comprend
une partie de moulage (21) mobile le long d'un premier axe (z), ladite partie de moulage présentant frontalement une surface d'accouplement (21a) adaptée pour recevoir le bord périphérique (PE) du réservoir (HT), et sur laquelle est formée une cavité (23) configurée pour être alimentée en deuxième matière plastique dans l'état fluidique et former avec ladite deuxième matière plastique un joint d'étanchéité sur le bord périphérique (PE) du réservoir (HT), et
au moins une paire de chariots (25, 26, 27, 28) opposés pouvant glisser le long d'un deuxième axe (y) orthogonal au premier axe (z), lesdits chariots étant mobiles entre une position ouverte, dans laquelle les chariots permettent au réservoir (HT) d'être positionné sur ou retiré de la partie de moulage (21), et une position de retenue, dans laquelle les chariots coopèrent pour définir une ouverture présentant une section transversale inférieure à la section transversale de la bride (F) du réservoir (HT),
**caractérisée en ce que** la partie de moulage (21) peut être commandée pour amener la bride (F) du réservoir (HT) contre un bord (25a, 26a, 27a, 28a) des chariots (25, 26, 27, 28) dans la position de retenue et appliquer contre les chariots (25, 26, 27, 28) une force de fermeture dirigée le long dudit premier axe de sorte que la bride (F) du réservoir (HT) est serrée entre le bord (25a, 26a, 27a, 28a) des chariots (25, 26, 27, 28) et la surface d'accouplement (21a) de la partie de moulage (21).

2. Machine selon la revendication 1, dans laquelle ladite au moins une paire de chariots comprend deux paires de chariots (25, 26, 27, 28) opposés pouvant glisser respectivement le long du deuxième axe (y) et le long d'un troisième axe (x) orthogonal au premier axe (z) et au deuxième axe (y).

3. Machine selon la revendication 1 ou 2, dans laquelle dans une position d'injection la bride (F) du réservoir (HT) est serrée entre le bord (25a, 26a, 27a, 28a) des chariots (25, 26, 27, 28) dans la position de retenue et la surface d'accouplement (21a) de la partie de moulage (21), et le reste du réservoir (HT) fait saillie à travers l'ouverture définie par les chariots (25, 26, 27, 28).

4. Machine selon l'une quelconque des revendications précédentes, dans laquelle la partie de moulage (21) est interchangeable et est montée de manière amovible sur un poinçon (22) mobile le long du premier axe (z).

5. Machine selon la revendication 4, comprenant en outre un élément chauffant (22a, 21c) configuré pour chauffer la deuxième matière plastique dans l'état fluidique, ledit élément chauffant étant porté par la partie de moulage (21) ou par le poinçon (22).

6. Procédé pour le moulage par insertion d'un joint d'étanchéité sur un réservoir (HT) en matière plastique qui présente un bord périphérique (PE) pourvu d'une bride (F), avec une machine selon l'une quelconque des revendications précédentes, le procédé comprenant les étapes suivantes
le positionnement du réservoir (HT) sur la surface d'accouplement (21a) de la partie de moulage (21),
la fermeture des chariots (25, 26, 27, 28) autour du réservoir (HT) dans la position de retenue,
le déplacement de la partie de moulage (21) pour amener la bride (F) du réservoir (HT) contre le bord (25a, 26a, 27a, 28a) des chariots (25, 26, 27, 28) dans la position de retenue et appliquer contre les chariots (25, 26, 27, 28) une force de fermeture dirigée le long dudit premier axe de sorte que la bride (F) du réservoir (HT) est serrée entre le bord (25a, 26a, 27a, 28a) des chariots (25, 26, 27, 28) et la surface d'accouplement (21a) de la partie de moulage (21),
l'injection de la deuxième matière plastique dans l'état fluidique dans la cavité (23) de la partie de moulage (21), et le fait de laisser la deuxième matière plastique durcir,
le fait de ramener les chariots (25, 26, 27, 28) dans la position ouverte, et
le retrait du réservoir (HT) avec le joint d'étanchéité moulé.
